# EUROPÄISCHE PATENTANMELDUNG

(11) **EP 2 502 667 A1**
(43) Veröffentlichungstag der Anmeldung: **26.09.2012**
(21) Anmeldenummer: 11159368.7
(22) Anmeldetag: 23.03.2011
(51) Int. Cl.: B01D 53/26, H02K 9/26

(54) **Wasserstoffgekühlter Generator mit kontinuierlicher Gastrocknung**

(71) Anmelder: SIEMENS AKTIENGESELLSCHAFT, 80333 München (DE)
(72) Erfinder: Amann, Christian, 46238 Bottrop (DE); Beckmann, Dr. Björn, 47057 Duisburg (DE); Beul, Ulrich, 45219 Essen (DE); Gindorf, Dr. Christian, 47829 Krefeld (DE); Grau Sorarrain, Esteban, 40215 Düsseldorf (DE); Günther, Dr. Thomas, 40668 Meerbusch (DE); Kadau, Dr. Kai, 46519 Alpen (DE); Kapustina, Dr. Anna, 45468 Mülheim (DE); Koebe, Mario, 45478 Mülheim an der Ruhr (DE); Rehwald, Ina, 45473 Mülheim an der Ruhr (DE); Rollmann, Dr. Georg, 45472 Mülheim Ruhr (DE); Stiehm, Andreas, 53424 Remagen-Kripp (DE)

(57) **Zusammenfassung**

Die Erfindung betrifft einen wasserstoffgekühlten Generator, der eine Trocknungsregenerations-Einheit (3) aufweist, die derart ausgebildet ist, dass in einer hygroskopischen Flüssigkeit (4) der mit Wasser verunreinigte Kühlgas-Wasserstoff (2) kontinuierlich vom Wasser getrennt wird.

## Beschreibung

Die Erfindung betrifft ein Verfahren zur kontinuierlichen Gastrocknung von mit Wasser verunreinigtem Kühlgas-Wasserstoff sowie einen wasserstoffgekühlten Generator, wobei Kühlgas-Wasserstoff zur Kühlung des Generators verwendet wird.

Einzelne Bauteile eines elektrischen Generators erwärmen sich während des Betriebes derart, dass eine Kühlung erforderlich ist. Es sind verschiedene Kühlungsverfahren bekannt, wie z.B. Luftkühlung, Wasserkühlung und Wasserstoffkühlung. Das Kühlmedium wird hierbei durch Kühlleitungen durch die verschiedenen zu kühlenden Bauteile des elektrischen Generators geführt. Einige Bauteile, die in einem wasserstoffgekühlten Generator gekühlt werden, weisen Materialien auf, die hygroskopische Eigenschaften aufweisen. Diese Bauteile weisen vergleichsweise große Oberflächen auf, wie z.B. die eingesetzte Vielzahl an Blechen, die eine Beschichtung aufweisen, die dazuführt, dass Wasser in den Wasserstoff hinein verdunstet. Dieses im Wasserstoff gebundene Wasser reduziert den Taupunkt des Generatorgases.

Problematisch ist hierbei, dass bei reduzierten Taupunkten die Gefahr besteht, dass an blanken und unter Spannung stehenden Teilen Wasser kondensiert und dadurch ein elektrischer Überschlag entstehen könnte. Dies ist insbesondere bei Neumontagen und Revisionen der Fall. Ein weiteres Problem ist, dass es zu Spannungsrisskorrosion, Korrosion von Stahlteilen und beschleunigte Alterung des Isolationsmaterials kommen kann. Daher werden Bestrebungen unternommen, den Taupunkt des Wasserstoffes im elektrischen Generator durch Trocknung unterhalb einer Gefahrenschwelle zu halten. Bekannt ist es hierbei den elektrischen Generator derart auszulegen, dass eine diskontinuierliche Trocknung des Wasserstoffgases erfolgt. Dazu wird das zu trocknende Wasserstoffgas durch 3-Wege-Hähne von unten nach oben über Trockenperlen geleitet. Beim Durchströmen dieser Trockenperlen wird dem Wasserstoffgas die Feuchtigkeit durch Absorption entzogen. Durch Regeneration der Trockenperlen wird das Absorptionspotenial wieder erhöht. Dazu wird ein Gebläse in Verbindung mit einer Heizung eingesetzt, die zur Erwärmung der für den Regenerationsprozess benötigten Luft sorgt. Des Weiteren werden Messgeräte und Armaturen zur Einstellung und Steuerung des Trocknungs- und Regenerationsvorganges eingesetzt. Bei dieser Art der Trocknung des Wasserstoffgases wird in der Regel alle 8 Stunden auf Regeneration umgeschaltet. Nachteilig ist daher die Diskontinuierlichkeit, die zu einer Verlängerung des Trocknungsprozesses führen kann. Da der eingesetzte Indikatorfarbstoff temperaturempfindlich ist, führt dies auch zu einem weiteren Problem.

Wünschenswert wäre es, ein kontinuierliches Verfahren zur Gastrocknung zu haben.

An dieser Stelle setzt die Erfindung an.

Es ist Aufgabe der Erfindung, ein kontinuierliches Verfahren zur Gastrocknung anzugeben.

Gelöst wird diese Aufgabe durch ein Verfahren zur kontinuierlichen Gastrocknung von mit Wasser verunreinigtem Kühlgas-Wasserstoff, wobei der mit Wasser verunreinigte Kühlgas-Wasserstoff durch eine hygroskopische Flüssigkeit geleitet wird, wobei die hygroskopische Flüssigkeit dem mit Wasser verunreinigtem Kühlgas-Wasserstoff das Wasser entzieht.

Des Weiteren ist es Aufgabe der Erfindung einen wasserstoffgekühlten Generator anzugeben, der ein kontinuierliches Trocknungsverfahren für Wasserstoff aufweist. Gelöst wird diese Aufgabe durch einen wasserstoffgekühlten Generator, wobei Kühlgas-Wasserstoff zur Kühlung des Generators verwendet wird, wobei eine Trocknungsregenerations-Einheit vorgesehen ist, die mit einer hygroskopischen Flüssigkeit befüllt ist und derart ausgebildet ist, dass der mit Wasser verunreinigte Kühlgas-Wasserstoff durch die hygroskopische Flüssigkeit strömt.

Vorteilhafte Weiterbildungen sind in den Unteransprüchen angegeben.

Die Erfindung geht von dem Gedanken aus, dass eine geeignete, hygroskopische Flüssigkeit verwendet werden kann, durch die das mit Wasser verunreinigte Kühlgas-Wasserstoff geleitet wird und in einem chemischen Prozess das Wasser kontinuierlich vom Kühlgas-Wasserstoff getrennt wird. Dies führt dazu, dass die hygroskopische Flüssigkeit mit dem Wasser des Kühlgas-Wasserstoffs in Berührung kommt und mit dem Wasser gebunden wird. Der Kühlgas-Wasserstoff wird somit von dem störenden Wasser quasi befreit und aus der hygroskopischen Flüssigkeit geleitet. Dadurch ist eine Trennung des Wassers mit dem Kühlgas-Wasserstoff möglich, der auf einen kontinuierlichen Betrieb ausgerichtet ist.

Ein Vorteil der Erfindung ist, dass durch die Verwendung der hygroskopischen Flüssigkeit eine Gasdichtigkeit gewährleistet ist, da die hygroskopische Flüssigkeit eine Barriere zu der Umgebungsluft darstellt.

In einer ersten vorteilhaften Weiterbildung durchläuft die hygroskopische Flüssigkeit einen Kreislauf, wobei an einer Zuführstelle die hygroskopische Flüssigkeit mit dem mit Wasser verunreinigtem Kühlgas-Wasserstoff in Berührung kommt und an einer Regenerations-Auslassstelle, die mit Wasser gebundene hygroskopische Flüssigkeit zu einer Regenerationseinheit geleitet wird, wo das Wasser von der hygroskopischen Flüssigkeit getrennt wird und anschließend die hygroskopische Flüssigkeit an einer Regenerationszuführstelle dem Kreislauf wieder zugeführt wird.

Durch diesen Kreislauf wird gewährleistet, dass zunächst der Kühlgas-Wasserstoff gereinigt wird und ein Verbrauch der hygroskopischen Flüssigkeit minimiert wird.

In einer weiteren vorteilhaften Weiterbildung wird die Regenerationseinheit derart weitergebildet, dass in dieser das Wasser mittels Desorption z.B. durch Temperaturerhöhung von der hygroskopischen Flüssigkeit getrennt wird. Dies ist eine vergleichsweise einfache und kostengünstige Ausführung, das Wasser von der hygroskopischen Flüssigkeit zu trennen.

Vorteilhafterweise wird als hygroskopische Flüssigkeit Lösungen oder förderbare Feststoffformen von Lithiumbromid, Lithiumchlorid, Kalziumchlorid oder Glycerin verwendet.

Die zu den wasserstoffgekühlten Generator angegebenen Vorteile der vorteilhaften Weiterbildungen ergeben sich entsprechend aus den zu dem Verfahren angegebenen Vorteilen.

Ausführungsbeispiele der Erfindung werden nachfolgend anhand der Zeichnung beschrieben. Diese sollen die Ausführungsbeispiele nicht maßstäblich darstellen, vielmehr ist die Zeichnung in schematisierter und/oder leicht verzerrter Form ausgeführt. Im Hinblick auf Ergänzungen der aus der Zeichnung unmittelbar erkennbaren Lehren wird hier auf den einschlägigen Stand der Technik verwiesen.

Im Einzelnen zeigt die Zeichnung in:

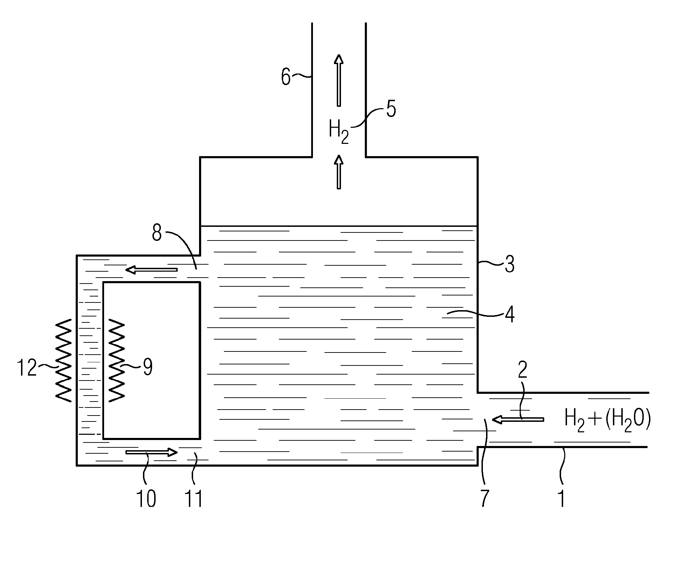

- Figur 1: eine schematische Darstellung der Gastrocknung.

Die einzige Figur zeigt eine schematische Darstellung der Gastrocknung. Über eine Zuführleitung 1 strömt mit Wasser verunreinigter Kühlgas-Wasserstoff 2 zu einer Trocknungsregenerations-Einheit 3 mit einer darin befindlichen hygroskopischen Flüssigkeit 4. Diese hygroskopische Flüssigkeit 4 kann beispielsweise eine Lösung oder eine förderbare Feststoffform von Lithiumbromid, Lithiumchlorid, Kalziumchlorid oder Glycerin sein. Die Trocknungsregenerations-Einheit 3 ist in erster Näherung als ein Behälter ausgebildet. Der mit Wasser verunreinigte Kühlgas-Wasserstoff 2 strömt durch die hygroskopische Flüssigkeit 4, wobei die hygroskopische Flüssigkeit 4 dem mit Wasser verunreinigten Kühlgas-Wasserstoff 2 das Wasser entzieht. Anschließend strömt ein gereinigter Wasserstoff 5 über eine Ausströmleitung 6 zum elektrischen Generator.

Die hygroskopische Flüssigkeit 4 durchläuft einen Kreislauf, wobei an einer Zuführstelle 7 die hygroskopische Flüssigkeit 4 mit dem mit Wasser verunreinigtem Kühlgas-Wasserstoff 2 in Berührung kommt und an einer Regenerations-Auslassstelle 8 die mit Wasser gebundene hygroskopische Flüssigkeit 4 zu einer Regenerationseinheit 9 geleitet wird, wo das Wasser von der hygroskopischen Flüssigkeit 4 getrennt wird. Anschließend wird die gereinigte hygroskopische Flüssigkeit 10 an einer Regenerations-Zuführstelle 11 dem Kreislauf wieder zugeführt.

In der Regenerationseinheit 9 wird das Wasser von der hygroskopischen Flüssigkeit 4 mittels einer Temperaturerhöhung getrennt.

Der gereinigte Kühlgas-Wasserstoff 5 wird in einem nicht näher dargestellten wasserstoffgekühlten Generator eingesetzt. Da der Kreislauf kontinuierlich erfolgt, wird daher der mit Wasser verunreinigte Kühlgas-Wasserstoff kontinuierlich vom Wasser gereinigt.

Zum Trennen des Wassers von der hygroskopischen Flüssigkeit 4 ist die Regenerationseinheit 9 mit einer nicht näher dargestellten Aufwärmeinheit 11 ausgebildet, die zum Erhöhen der Temperatur der mit Wasser gebundenen hygroskopischen Flüssigkeit 4 ausgebildet ist.

## Patentansprüche

1. Verfahren zur kontinuierlichen Gastrocknung von mit Wasser verunreinigtem Kühlgas-Wasserstoff (2), wobei der mit Wasser verunreinigte Kühlgas-Wasserstoff (2) durch eine hygroskopische Flüssigkeit (4) geleitet wird,
wobei die hygroskopische Flüssigkeit (4) dem mit Wasser verunreinigten Kühlgas-Wasserstoff das Wasser entzieht.

2. Verfahren nach Anspruch 1,
wobei die hygroskopische Flüssigkeit (4) einen Kreislauf durchläuft,
wobei an einer Zuführstelle (7) die hygroskopische Flüssigkeit (4) mit dem mit Wasser verunreinigten Kühlgas-Wasserstoff (2) in Berührung kommt und an einer Regenerations-Auslassstelle (8) die mit Wasser gebundene hygroskopische Flüssigkeit (4) zu einer Regenerationseinheit (9) geleitet wird, wo das Wasser von der hygroskopischen Flüssigkeit (4) getrennt wird und anschließend die hygroskopische Flüssigkeit (4) an einer Regenerations-Zuführstelle (11) dem Kreislauf wieder zugeführt wird.

3. Verfahren nach Anspruch 1 oder 2,
wobei in der Regenerationseinheit (9), das Wasser mittels Temperaturerhöhung von der hygroskopischen Flüssigkeit (4) getrennt wird.

4. Verfahren nach einem der vorhergehenden Ansprüche,
wobei eine Lösung oder förderbare Feststoffform von Lithiumbromid, Lithiumchlorid, Kalziumchlorid oder Glycerin verwendet wird.

5. Verfahren nach einem der vorhergehenden Ansprüche,
wobei die kontinuierliche Gastrocknung in einem wasserstoffgekühlten Generator eingesetzt wird.

6. Wasserstoffgekühlter Generator,
wobei Kühlgas-Wasserstoff zur Kühlung des Generators verwendet wird,
wobei eine Trocknungsregenerations-Einheit (3) vorgesehen ist, die mit einer hygroskopischen Flüssigkeit (4) befüllt ist und derart ausgebildet ist, dass der mit Wasser verunreinigte Kühlgas-Wasserstoff (2) durch die hygroskopische Flüssigkeit (4) strömt.

7. Wasserstoffgekühlter Generator nach Anspruch 6,
wobei die Trocknungsregenerations-Einheit (3) einen Regenerationskreislauf zum Trennen der mit Wasser gebundenen hygroskopischen Flüssigkeit (4) vom Wasser aufweist, in dem die mit Wasser gebundene hygroskopische Flüssigkeit (4) vom Wasser trennbar ist.

8. Wasserstoffgekühlter Generator nach Anspruch 7,
wobei der Regenerationskreislauf eine Aufwärmeinheit (12) zum Erhöhen der Temperatur der mit Wasser gebundenen hygroskopischen Flüssigkeit (4) aufweist.

9. Wasserstoffgekühlter Generator nach Anspruch 6, 7 oder 8,
wobei die hygroskopische Flüssigkeit (4) eine Lösung oder eine förderbare Feststoffform von Lithiumbromid, Lithiumchlorid, Kalziumchlorid oder Glycerin ist.

10. Wasserstoffgekühlter Generator nach einem der Ansprüche 6 bis 9,
wobei die Trennung der mit Wasser gebundenen hygroskopischen Flüssigkeit (4) von Wasser kontinuierlich erfolgt.
